Europäisches Patentamt

European Patent Office

Office européen des brevets

(11) Publication number: **0 371 944**
**A2**

## (12) EUROPEAN PATENT APPLICATION

(21) Application number: **89850420.4**

(51) Int. Cl.⁵: **G06F 9/45**

(22) Date of filing: **27.11.89**

(30) Priority: **29.11.88 US 277388**

(43) Date of publication of application:
**06.06.90 Bulletin 90/23**

(84) Designated Contracting States:
**DE FR GB**

(71) Applicant: **International Business Machines
Corporation
Old Orchard Road
Armonk, N.Y. 10504(US)**

(72) Inventor: **Hargrove, Dan Carter
1417 Atterbury Lane
Austin Texas 78753(US)**
Inventor: **Hidalgo, Domingo Segundo
2200 Rogge Lane
Austin Texas 78723(US)**

(74) Representative: **Johansson, Lars E. et al
IBM Svenska AB Intellectual Property
Department 4-01
S-163 92 Stockholm(SE)**

(54) Computer system and method for translating a program.

(57) A translator for computer programming languages includes a run time library which performs lexical and syntactic analysis of a program. A selected language has lexical and syntactic features defined in a set of data structures. The run time library accesses the data structures to perform lexical scanning and parsing. The library is completely independent from the language being translated, and can be used with any language defined by appropriate data structures.

Fig. 1

# COMPUTER SYSTEM AND METHOD FOR TRANSLATING A PROGRAM

## BACKGROUND OF THE INVENTION

### 1. Technical Field:

The present invention is related generally to the translation of computer programming languages, and more specifically to the use of run time functions in connection with writing and executing a programming language translator.

### 2. Background Art:

Computer programming languages are used to describe sequences of operations to be performed by digital computers. Many different programming languages exist, and range from machine languages, which are interpreted directly by hardware, to high level languages which must be translated into an equivalent form prior to hardware execution.

"Translation" is a general term referring to the changing of the form of a program from one language to another. "Compiling" is synonymous with translation but is generally used with reference to the act of translating a high level language into machine language, which is directly executable on the hardware of a computer system, or into assembly language, which can be directly translated into machine language with relatively little effort.

The problem of programming language translation has received a great deal of study, and many theoretical and practical tools are available to assist the person who is writing a translator from one language to another. Among many others, two widely known references which describe the theory and practice of translating programming languages are "The Theory of Parsing, Translation and Compiling," A. Aho and J. Ullman, Prentice-Hall, Englewood Cliffs, New Jersey (1972) and "Principles of Compiler Design," A. Aho and J. Ullman, Addison-Westley, Reading, Maryland (1977).

Writing a programming language translator is a complex, difficult process. A translator must perform several processes, each of which is a complex programming project when considered independently. These separate parts include, in broad terms, lexical analysis, syntactic analysis, and semantic analysis, which are related to analysis of the source program, and optimization and code generation, which are related to construction of an output file.

Some portions of the translation process lend themselves to certain degrees of automation. In particular, the lexical analysis and syntactic analysis steps of the translation process have been subjected to rigorous formal analysis. As a result, tools are available to automate, in large part, the creation of lexical scanners, which perform lexical analysis, and parsers, which perform syntactic analysis. An example of such tools are the programs lex and yacc which are available on Unix (TM) and related software systems.

Current tools, such as lex and yacc, leave much to be desired from the standpoint of automated writing of programming language translators. They generate program code to perform lexical scanning and syntax parsing, but are not integrated. It is the responsibility of the human translator writer to write code which takes the output of a lexical scanner generated by lex and convert it to input usable by a syntactical parser generated by yacc. The translator writer is completely responsible for incorporating all necessary semantic analysis as best he can.

The output of available programs such as lex and yacc also have the drawback that any changes made to the specification of the language to be translated are reflected at multiple points throughout the automatically generated code. The translator writer must, after running the new language specification through the tools a second time, change all the portions of the code he has written separately in order to match changes to the code generated by lex and yacc. Since these changes are complex and fairly numerous, it is difficult to ensure that no errors are introduced when such a change is made. It is also difficult to ensure that changes made in one portion, for example the lexical scanner, are properly reflected in other portions such as the parser.

Whether or not automated tools are used to write the lexical scanner and parser, each programming language translator must contain all of the code necessary to perform lexical and syntactic analysis. Since knowledge of the language to be translated is incorporated in this code, it cannot generally be easily adapted for use in translating different languages. This is true even though many programming languages are very similar, with only a small number of nontrivial differences. Currently, there does not exist a mechanism for fully taking advantage of the fact that lexical scanning and parsing are processes which occur in a fairly standard manner regardless of the language being translated.

It would be desirable to provide a system which could take advantage of the fact that lexical scanning and parsing are functionally similar processes for most programming languages. It would also be desirable for such system to be easily used with translators for several different programming languages.

## SUMMARY OF THE INVENTION

The present invention is defined in the attached claims.

It is an object of the present invention to provide procedures for lexical scanning and parsing of an input language.

It is another object of the present invention to provide procedures for lexical scanning a parsing of an input language which are independent of a target language in which a translator is written.

It is a further object of the present invention to provide procedures for lexical scanning and parsing of an input language which are independent of a target language in which a translator is written, and which are independent of the input language.

Therefore, in order to accomplish these and other objects and advantages as will become apparent in accordance with the description below, a set of procedures for lexical scanning and parsing are provided as callable library routines. An input language translator is written in a target language, and standard, predefined data structures are provided in the target language. The information contained within such data structures define the lexical and syntactic rules for the input language. The library routines reference the predefined data structures, and a complete lexical and syntactic analysis of an input language program or program fragment is performed within the library procedures. The function of the library procedures is independent of the target language, and is independent of the input language except to the extent that the input language is defined by the data structures referenced by the procedures.

## BRIEF DESCRIPTION OF THE DRAWINGS

The novel features believed characteristic of the invention are set forth in the appended claims. The invention itself however, as well as a preferred mode of use, and further objects and advantages thereof, will best be understood by reference to the following detailed description of an illustrative embodiment when read in conjunction with the accompanying drawings, wherein:

FIGURE 1 is a block diagram of a system for creating an input language translator according to the present invention;

FIGURE 2 is a flowchart illustrating process steps undertaken by lexical scanning and parsing routines according to the present invention;

FIGURE 3 is a block diagram of a data structure used with a lexical scanner;

FIGURE 4 is a block diagram of a syntax graph for use with a parser according to the present invention; and

FIGURE 5 is a flowchart illustrating operation of a parser.

## DETAILED DESCRIPTION OF THE PREFERRED EMBODIMENT

The description which follows refers to three different programming languages. These languages are: a meta-language, a target language, and an input language. The meta-language is a formalized description of the input language. The input language is the language for which the transla tor is being written. The target language is the language which is used to write the translator.

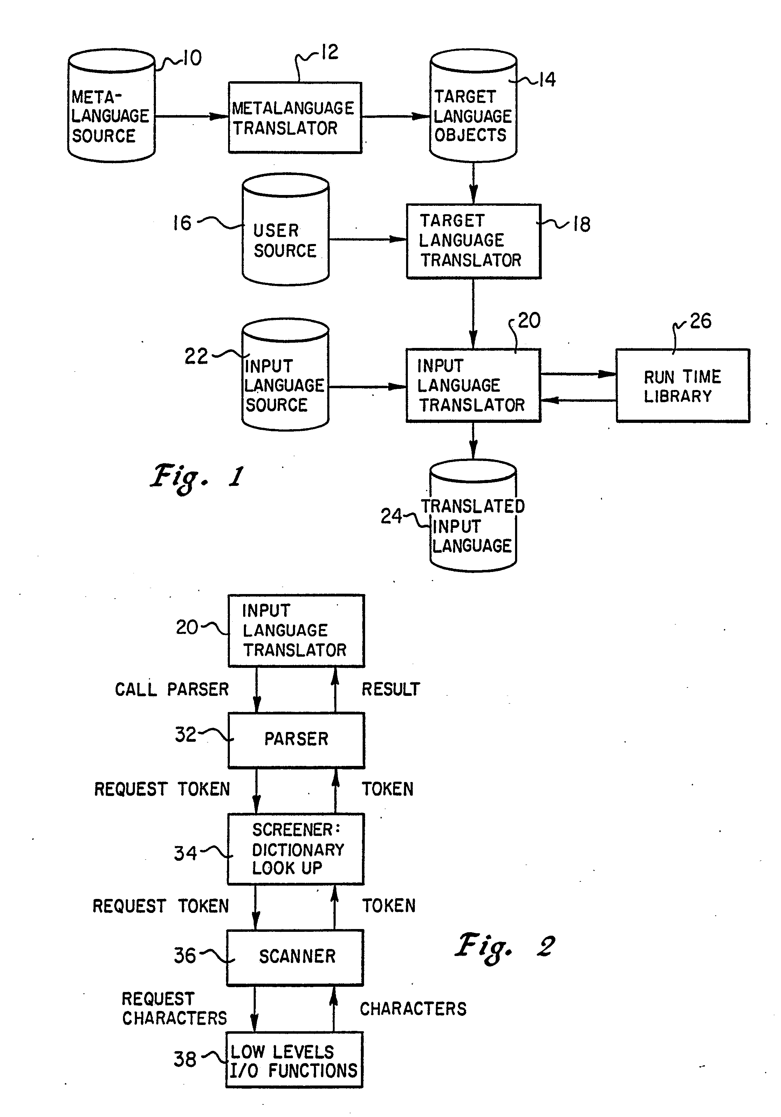

Referring to Figure 1, a meta-language source file 10 contains a formal specification of an input language. The specification is preferably in a standard format, such as Backus-Naur Format (BNF), which describes the vocabulary, lexical specification, and syntax of the input language. The statements in the meta-language source file 10 are read by a meta-language translator 12 and converted into a file 14 containing target language objects.

The meta-language translator 12 can be any program which is capable of converting the meta-language source file 10 into the target language objects 14 having the properties described below. For purposes of the present invention, the meta-language source file 10 and translator 12 can be dispensed with and the target language objects 14 maintained directly. However, use of the meta-language source file 10 generally allows the specification of the input language to be more clearly understood by the user, who is a person writing programming language translators.

The target language in which the objects 14 are written can be any language suitable for the writing of translators. Examples of such languages are C, Pascal, and Ada. The selection of the target language can be made independently of the identity of the input language, and will generally be chosen to be a language with which the user is familiar.

The target language objects 14 do not represent the entire translator. A user must provide independently generated user source files 16 which contains semantic analysis and code generation portions of the translator. The user source 16 and the target language objects 14 are used as input to a target language translator 18, which generates an executable input language translator 20. This translator 20 reads a source program from an input language source file 22, and generates a translated input language file 24. The translated file 24 may be an executable file, or may be in any other form which can eventually be translated into an executable file. The form of the translated file 24 is dependent upon the code generation portion of the input language translator 20, which was defined by code in the user source file 16.

A run time library 26 provides a set of procedures for performing lexical analysis and syntactic analysis of the input language source file 22. The input language translator 20 calls a parser routine within the library 26, and passes as parameters thereto an input string from the source file 22 and a goal to be parsed. This goal can be, for example, a single statement, a subroutine, or a complete program. The parser routine then checks the syntax of the input string to see if it is valid for the required goal. For example, if it is desired to translate an entire program in the input language, the parser would be given the goal to parse an entire program. If the input language source file 22 is a valid program in the input language, the parser within the run time library 26 would return a result showing that it is valid.

Referring now to Figure 2, the internal operation of the routines in the run time library 26 is illustrated. The first step is for the input language translator 20 to determine a goal to be applied to the parsing of an input string. A parser 32 is then called, and a desired goal and the location of the input string are passed as parameters. The parser 32 then requests a token from a screener 34. The screener 34 in turn requests a token from a scanner 36. The scanner 36 is responsible for scanning the input string to identify each individual lexical object. The scanner 36 does this by requesting individual characters from a set of low level I/O functions 38 which are typically supplied as part of the operating system.

The I/O functions 38 then return single successive characters from the input string to the scanner 36. The scanner 36 checks the incoming characters against a set of allowable characters for a given lexical object, and combines the characters it has received into a token representing a single lexical object. The text string for the token is retained, and passes with the token for later use. During the combination process, the scanner 36 may translate some of the incoming characters, such as replacing tabs, carriage returns, and linefeeds with blanks, deleting multiple consecutive blanks, and changing all alphabetic characters to upper case. This character substitution process is preferably defined in a predefined lexical objects data structure, as described in detail in U.S. Application Serial No.          , titled SYSTEM AND METHOD FOR WRITING PROGRAMMING TRANSLATORS, incorporated by reference herein. The scanner 36 then passes the token and its text string to the screener 34 which looks it up in a predefined dictionary of reserved words as known in the art. The screener 34 then passes a corresponding token to the parser 32, which utilizes such token in its parse. If the parse is not yet complete, the parser 32 requests the next token from the screener 34, and the process repeats.

Once the parse is complete, the parser passes the result back to the input language translator 20. At the conclusion of the parse the input language translator has all of the information it needs to perform code generation of the translated input language file 24.

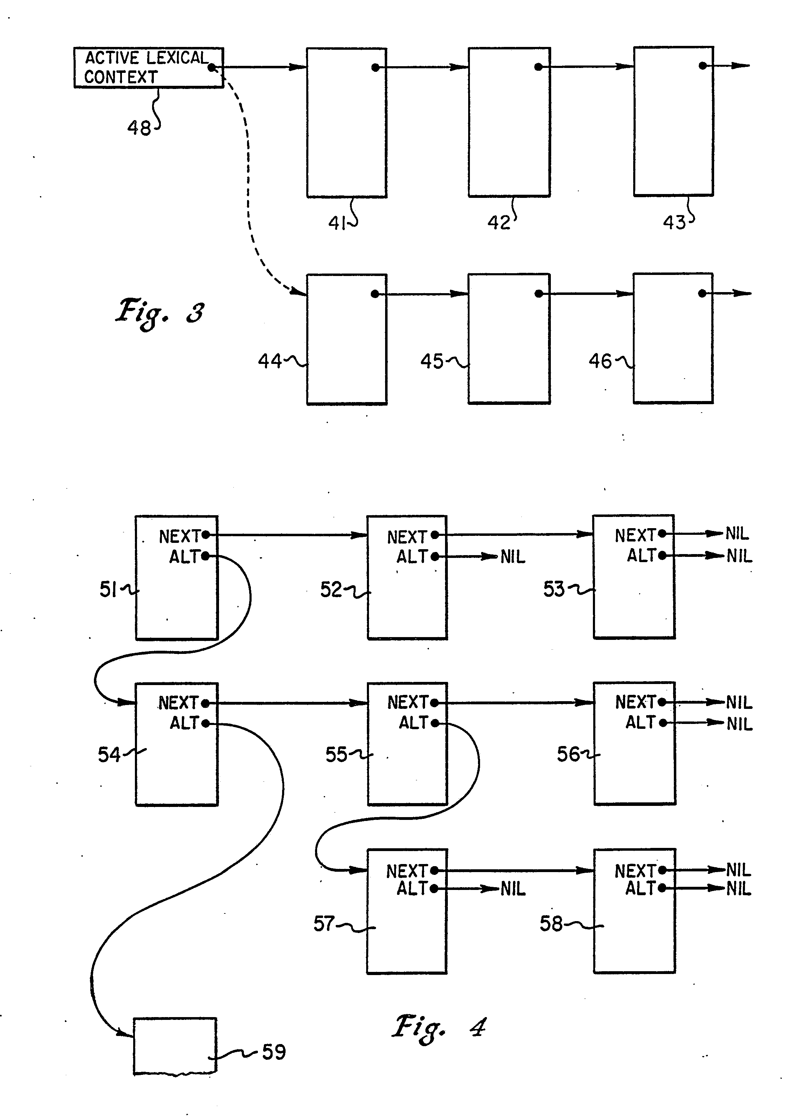

Operation of the scanner 36 will now be described in connection with Figure 3. The scanner 36 first tokenizes an input text string. This is done by comparing the text string to a list of lexical rules. Each lexical rule defines; 1) a set of all valid initial characters, 2) a set of all valid characters for the body of the text string, and 3) the set of all valid terminating characters. This information can be easily stored in a single data structure, as described in more detail in co-pending application Serial Number       , titled SYSTEM AND METHOD FOR WRITING PROGRAMMING LANGUAGE TRANSLATORS, which is incorporated by reference herein. Each of the boxes 41 through 46 of Figure 3 represents one lexical rule. These rules, which define lexical contexts, are linked into lists as known in the art, with rules 41 through 43 being the first three rules of one set, and with rules 44 through 46 being the first three rules in a second set. Only one set of rules is active at a time.

When the scanner 36 begins scanning a text string, it compares the first character of the string to the set of valid initial characters for the first rule 41. If the character is not in such set, then the first character is compared to the set of valid initial characters for the next rule 42. This process continues until either a match is found, or the end of the list of rules is reached, indicating an error in the input string.

Once a match is made between the first character of the text string and the set of initial first characters in some lexical rule, that rule is chosen and the remainder of the string is scanned to determine whether all of the characters in the string are valid characters for the body of the lexical object defined by the chosen rule. The last character in the string must correspond to an element of the set of terminal characters defined for that lexical rule. Once the entire text string has been read, and correctly matched with the lexical rule, it is converted into a token as known in the art. This involves assigning it the lexical rule number.

The screener 34 also determines whether the text string is a reserved word. This is done in conjunction with the dictionary lookup. If a match for the text string is found within the separate list of reserved words in the dictionary, then the token id-number for the lexical object is switched from the lexical rule id-number to the dictionary token id-number.

Figure 3 shows two parallel linked lists of lexical rules, each list representing a different lexical context. This is useful in some systems which may require scanning of input strings in two or more different programming languages within a single source file. Box 48 is a pointer to the linked list beginning with rule 41, but can be changed to point to the linked list beginning with rule 44 as shown by the dashed arrow. Changing the value of pointer 48 causes a different set of lexical rules to be applied to the incoming text strings. The value of the pointer 48 is determined by the input language translator 20 before the parser 32 is called.

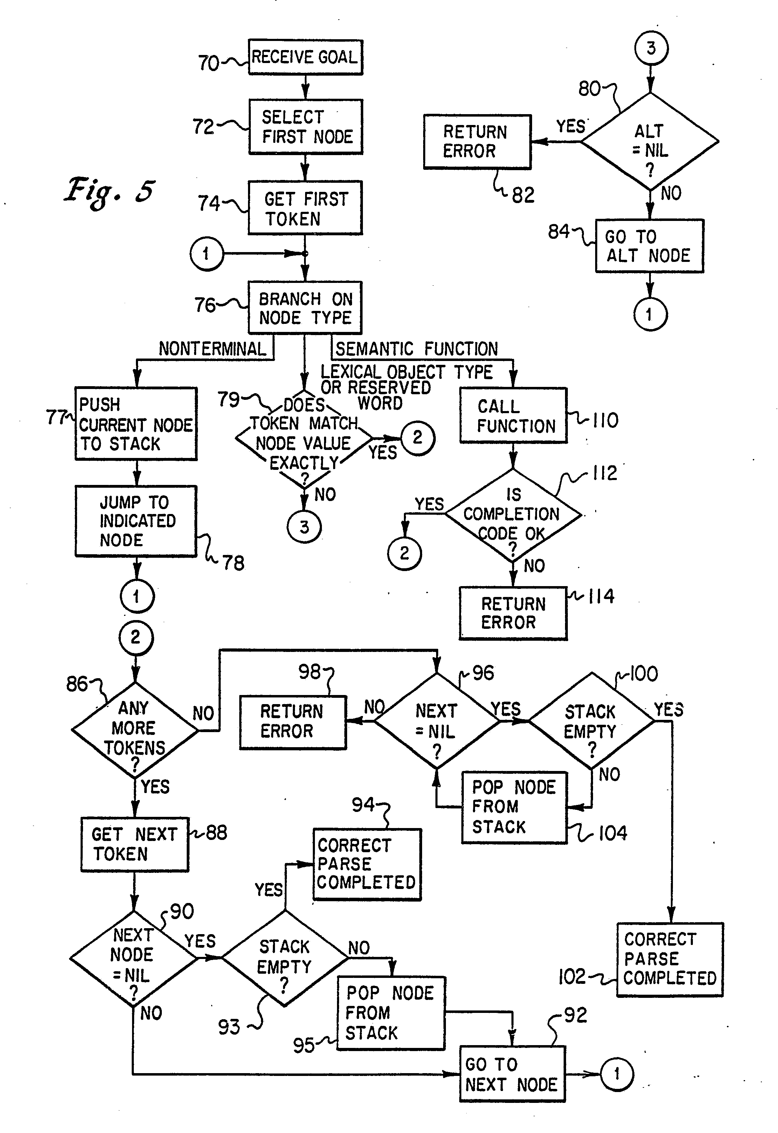

Operation of the parser 32 will now be described in connection with Figures 4 and 5. Figure 4 shows a series of objects 51 through 59 linked together into a graph. Each object contains a pointer to a next object (labelled NEXT) and a pointer to an alternative object (labelled ALT). Each object also contains information indicating a type for the object, and its value. In a preferred embodiment, there are four node types: semantic function, wherein the value identifies a user supplied or machine generated semantic function to be executed; reserved word, wherein the value is an index into a list of reserved words; lexical object type, wherein the value is the id-number of the lexical token (lexical rule id-number); and non-terminal, wherein the value is an index into an array of pointers each of which points to a node of the syntax graph.

The parser 32 functions by reading tokens one at a time and comparing them to nodes of the syntax graph. If a token matches that expected by the current node of the graph, the parser requests the next token and moves to the next node in the graph. The parser 32 continues traversing the syntax graph by matching tokens to nodes on a one for one basis until a NEXT pointer is empty, indicated by NIL in Figure 4. When a NEXT pointer is NIL, a goal or subgoal, as explained in connection with Figure 5, has been reached.

Figure 5 illustrates the operation of the parser 32. The parser 32 receives a goal (step 70) from the input language translator 20. A goal is an identifiable code block within the input language, such as a single statement, a declaration section, a subroutine, or a complete program. Each possible goal which has been defined for the input language corresponds to an entry point into the syntax graph. The entry points can be collected into an array of pointers to nodes in the syntax graph, with each entry in the array corresponding to a different goal. As is described below, parsing a given goal may require additional subgoals to be generated and satisfied. For example, a complete program may include declarations, subroutines, and statements, while the subroutines may in turn include declarations, further subroutines, and statements. As is described below, the syntax graph will be recursively traversed by the parser.

When a goal has been received, the parser selects the corresponding node of the syntax graph as the first node (step 72), and gets the first token (step 74). This token, and all other tokens obtained by the parser, are requested and received as described in connection with Figure 2.

The action taken by the parser depends on the type of the current node, and a branch in the flow of control of the parser is made depending on the node type (step 76). If the node is a non-terminal, the value field will indicate a new subgoal to be satisfied. Therefore, the identity of the current node is pushed onto a stack (step 77), and the parser jumps to the indicated node, which corresponds to the subgoal (step 78). The token is not consumed by this process, which corresponds to an e-move of a push-down automaton. If the node type is a lexical object type or a reserved word, the value field will indicate the id-number of the lexical object which is expected at that point in the parse. The id-number of the current token is compared to the value of the current node (step 79). If the token id-number and expected lexical object id-number do not match, the value of the ALT pointer is checked (step 80). If this pointer is NIL, there are no valid alternative parses defined by the input language, and an error condition is signalled (step 82). This error condition may include simply stopping the parse and indicating the location of an error, or may involve more complex error recovery routines as known in the art. Otherwise, the ALT pointer is followed to the appropriate node (step 84), and control returned to step 76. Again, no input tokens have been consumed to perform this process.

If the yes branch is taken from step 79, indicating that the token id-number matches the id-number expected for that node, a check is made to see if any more tokens are available from the input string (step 86). If tokens are available, indicating that the parse is not yet complete, the next token is obtained (step 88). The value of the NEXT pointer is checked to see if it is NIL (step 90). If it is not, the parser goes to the NEXT node (step 92), and control returns to step 76. At such time, the token just obtained in step 88 will be compared to the node reached in step 92.

If the NEXT pointer is NIL in step 90, a check is made (step 93) to see whether the stack is empty. If so, the parser has parsed the original goal received in step 70, and parsing is completed (step 94). If the stack is not empty, the parser has parsed a subgoal, and control must be returned to the point from which the subgoal was called. This is accomplished by popping the top node from the stack (step 95), and moving to that node (step 92).

If the parse completes in step 94, the incoming token string is not yet empty. This indicates that the parser has completely parsed the original goal received in (step 70), while input yet remains. This is an error if the input string supplied to the parser is supposed to parse exactly into the goal received in step 70. An alternative system design would have this condition not indicate an error, and instead have the parser return a pointer into the input string indicating how much of the input string was read to complete the parse of the original goal. This information can then be used by the input language translator 20 to decide what action it will take.

If the test of step 86 indicates that there are no more input tokens, the input string has been exhausted. At this point, the parser should not require the reading of any more input tokens to complete the parse. However, the parser may be several levels deep into a series of subgoals, and it is necessary to determine whether the parse stack can be emptied in a series of e-moves.

In step 96, the NEXT pointer of the current node is checked to see if it is NIL. If it is not, an error condition has occurred (step 98). This means that the input string has been exhausted, but the parser requires additional input to complete its parse. Error handling may be accomplished in step 98 in any of several ways as is known in the art.

If the test of step 96 shows the NEXT pointer to be NIL, the parse stack is checked to see if it is empty (step 100). If it is, the stack has been emptied at the same time as the input string has been exhausted, and a correct parse has been completed (step 102). This situation is signaled to the input language translator.

If step 100 shows that the stack is not yet empty, the top node is popped from the stack (step 104), and its respective NEXT pointer check to see if it is NIL (step 96). The loop between steps 96, 100 and 104 continues until the stack empties or a node which does not have NIL as its NEXT pointer is popped.

If the node type detected in step 76 is a semantic function, that function is called (step 110). Semantic functions are supplied by the user, or generated by the metalanguage translator as auxilary functions to the parser, and perform the semantic analysis of the input language string passed to the parser 32. This includes functions such as symbol table manipulation and association of types with variables. Code generation can also be performed by functions called in step 110. Since the semantic functions can be performed during the parse, it is not necessary for the parser to generate a parse tree upon which semantic analysis is performed after the parse is completed. The user can, in the semantic functions he writes, build a parse tree if desired, or may generate code directly.

The semantic function can return a completion code which indicates whether parsing may continue. For example, the syntax of the input language may call for a variable identifier at a particular point, but the input string should be invalid if the current token generates an improper mixed-type expression. Variable typing in similar situations can be tested by the semantic function, and the function can return a value indicating whether or not the token is actually valid. This return value is tested in step 112, which transfers control to step 86 if the completion code is successful, and returns an error (step 114) if it is not.

It will be easily seen that, when the data contained in the nodes of the syntax graph of Figure 4 defines the syntax of the input language, the parser of Figure 5 will recursively traverse that graph and parse an input string. The parser itself does not contain any information particular to any input language, but instead distills the standard steps of parsing. The information specific to any particular input language is contained wholly within the standard data structures which are predefined, and which are available to the parser. It will be recognized by those skilled in the art that the parser described in Figure 5 implements an LL(0) parser.

## Claims

1. A system for translating a computer program, comprising:
an input language source file containing the computer program;
a translator coupled to said source file, wherein said translator reads said source file and generates a translated version of the computer program, and wherein said translator includes a plurality of data structures, having a preselected format, which define lexical and syntactic properties of the input language;
a translated file coupled to said translator for receiving the translated version of the computer program generated thereby; and
a procedure library having routines called from said translator, wherein the routines utilize the translator data structures having the preselected format to perform lexical and syntactic analysis of said source file, and wherein the routines are independent from the input language and the target language.

2. The system of Claim 1, wherein the data structures comprise:

a syntax graph having a plurality of nodes, each node representing a tokenized lexical object, wherein the nodes are connected together by pointers to define a graph which represents the syntax of the input language; and

a linked list of lexical rules, each rule defining how a different lexical object is tokenized.

3. The system of Claim 2, wherein the procedure library routines comprise:

a lexical scanner which accepts a string and returns one or more lexical tokens corresponding thereto according to the rules in said linked list;

a dictionary lookup routine which determines whether tokens assembled by said scanner are part of a predefined vocabulary; and

a parser which accepts a sequence of lexical tokens and traverses at least a portion of said syntax graph, matches each token with one node thereof, and returns an indication of the syntactic structure of the sequence of tokens.

4. The system of Claim 3, wherein the indication of syntactic structure, returned by said parser, is a parse tree.

5. The system of Claim 1, wherein the procedure library routines comprise an executable library which is linked to said translator when said translator begins execution, and wherein one procedure library is usable by more than one different translator.

6. A method for translating a computer program, comprising the steps of:

(a) providing a source file containing a sequence of characters which define a computer program in an input language;

(b) providing a plurality of data structures, having a predefined format, which define lexical and syntactic properties of the input language;

(c) providing a library of routines which utilize the data structures of perform lexical and syntactic analysis of an input provided to the library, and which return results of such analysis;

(d) invoking the library of routines with the source file provided as input thereto; and

(e) writing to an output file a translated version of the source file based upon results obtained in step (d).

7. The method of Claim 6, wherein the predefined data structures include a syntax graph, and wherein step (d) comprises the steps of:

(d.1) calling a parser, in the library, and passing as parameters thereto a goal and the source file;

(d.2) obtaining a lexical token from the source file;

(d.3) matching the lexical token with a node of the syntax graph;

(d.4) if no match is found in step (d.3), indicating an error; and

(d.5) if a match is found in step (d.3), repeating steps (d.2) through (d.5).

8. The method of Claim 7, wherein step (d.2) comprises the steps of:

(d.2.1) scanning a portion of the source file corresponding to a next object;

(d.2.2) determining whether the next object is a valid object; and

(d.2.3) if the next object is a valid lexical object, tokenizing such lexical object.

9. The method of Claim 8, wherein step (d.2.3) comprises, if the next object is a valid lexical object, assigning a predefined numeric identification number to such lexical object.

Fig. 1

Fig. 2

*Fig. 3*

*Fig. 4*

*Fig. 5*